# EUROPEAN PATENT APPLICATION

(11) **EP 2 543 332 A1**
(43) Date of publication of application: **09.01.2013**
(21) Application number: 12004954.9
(22) Date of filing: 04.07.2012
(51) Int. Cl.: A61C 8/00

(54) **Dental implant abutment provided with at least one connecting element**

(30) Priority: 06.07.2011 IT MI20111256
(71) Applicant: Tramonte, Silvano Umberto, Milano (IT); Dominici, Daniele Aldo, S. Donato M.se (IT); Magnone, Domenico, 138 Garbagnate M.se (IT)
(72) Inventor: Tramonte, Silvano Umberto, Milano (IT); Dominici, Daniele Aldo, S. Donato M.se (IT); Magnone, Domenico, 138 Garbagnate M.se (IT)
(74) Representative: Nemni, Raffaelo

(57) **Abstract**

This invention refers to a dental implant abutment (2) provided with at least one connecting element (3) suitable to join to each other at least two dental implants.

## Description

### PURPOSE OF THE INVENTION

The subject of this invention is a dental implant abutment provided with at least one connecting element suitable to join together at least two dental implants.

### STATE-OF-THE-ART

It is known how to connect with each other dental implants on which the so-called temporary teeth are mounted. Such implants are connected to each other right after their placement in the bone crest of the patient's mouth. Such implants must be connected with each other to facilitate the preservation of their position in the bone crest up to the time when such bone crest has healed around the inserted dental implant. When the treated bone crest has healed, the connections are removed.

The known technique connects dental implants by welding a metal bar to the dental implants to be connected. The known connecting technique described above presents many disadvantages. As an example, not exhausting all possibilities, we indicate the following disadvantages:
(i) the effect of welding the bar to the implant abutment spoils the abutment itself, which has to be polished again when the said bar is removed;
(ii) the presence of the bar creates an unpleasant sensation of bulk for the patient;
(iii) there is a need to shape and passivate the bar;
(iv) during the welding action it is difficult to maintain the dental implant just inserted in the bony crest in a direction perpendicular to the occlusal plane. While welding the bar it is possible to compromise the perpendicular direction of one or more implants. In such case, the operator must unweld the bar to bring the implant back to an acceptable position, then repeat the welding operation;
(v) a long time is necessary to connect the bar to the dental implants, leading to operator and patient fatigue issues, as well as obvious hygiene problems.

### Explanation of the invention

This invention solves advantageously the issues of connecting the known dental implants by introducing an abutment of a dental implant provided with at least one connecting element. Such coupling device has the advantage of being able to connect two dental implant in an easy and quick fashion. Also, the current invention facilitates and makes quick and more hygienic the connection between implant, also thanks to the speed of execution in joining the connecting elements.

The said connecting element is positioned on an external side of the abutment in a way suitable to connect at least two implant abutments, therefore two dental implants. In their preferred realization, both abutments of the implants to be connected have the feature described in this invention. The connecting element can have any shape, but according to a series of experiments, the preferred shape of the connecting element is that of a small blade with rectangular surface.

With respect to the material to be used to realize the said connecting elements, various types of materials have been subjected to experimental tests. According to the results of such tests, the materials that have given the best results are metals and their alloys connected by welding. Among various metals and metal alloys, usually utilized in dentistry, tested in the experiments, surprisingly optimal reactions to the welding process applied to join two connecting elements have been noticed in titanium or titanium alloys of grade lower than 4, in particular titanium grade 2.

A preferred shape of realization of this implant abutment is provided with threading, to be screwed to the dental implant. The possibility of having an abutment to be screwed on the dental implant is advantageous because such abutment is installed after the placement of the dental implant in the bone crest. Such subsequent installation allows the operator to concentrate only on the dental implant insertion into the bone crest, without having to worry about the abutment, that could be damaged during placement of the dental implant into the bone crest. In fact, the integrity of the abutment is very important, because the artificial tooth will be placed on such abutment, and a damaged abutment could compromise the outcome of the dental work being performed.

### FIGURE DESCRIPTION

Figure 1 shows a three-dimensional view of some dental implants connected with the known technique.
Figure 2 shows a two-dimensional view of the device, subject of this invention.
Figure 3 shows a two-dimensional view of a different embodiment of the device, subject of this invention.

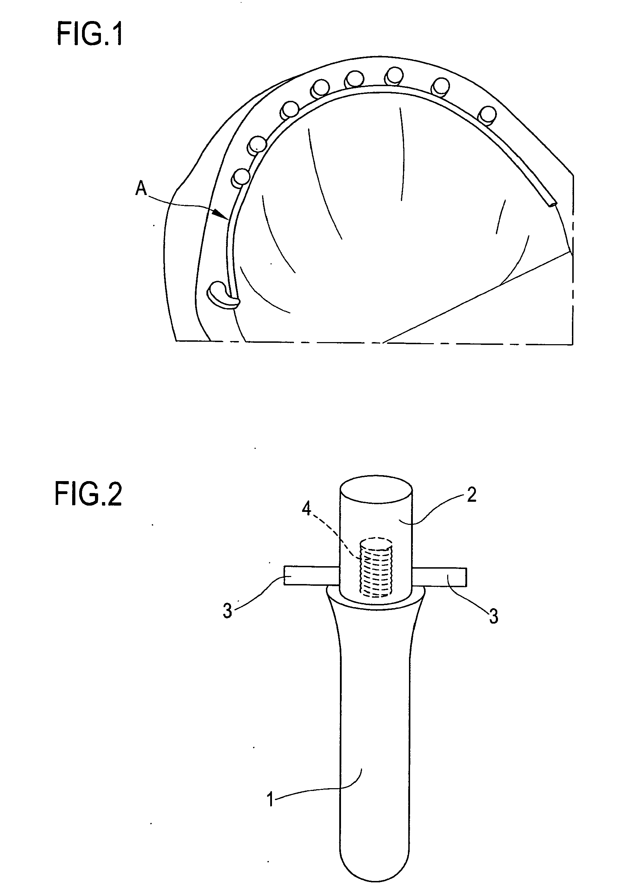

Figure 1 shows a three-dimensional view of some dental implants connected with the known technique. In such a figure, the bulk represented by bar (A), used to connect the various dental implant abutments, is highlighted in particular.

Figure 2 illustrates the dental implant (1) with the abutment (2) provided with two connecting elements (3) suitable to connect another two abutments (2) of dental implants (1), as a consequence, such implants are connected.

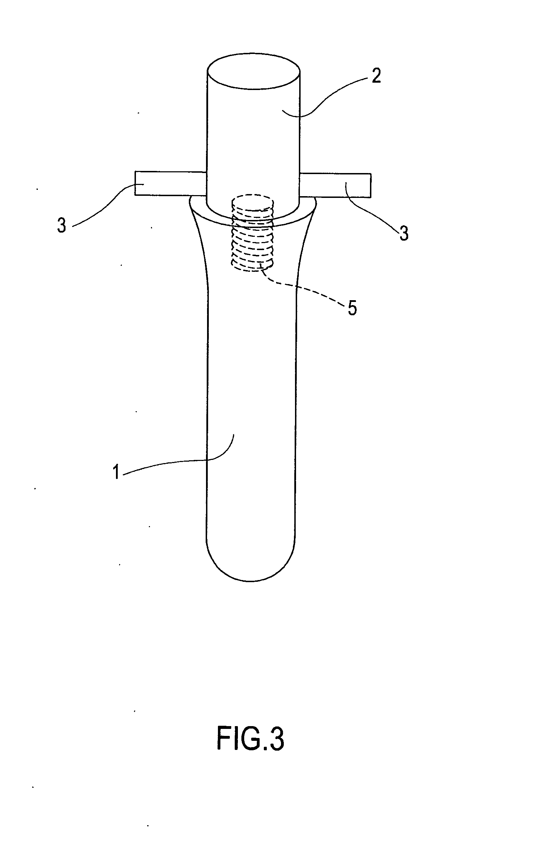

In the graphic representation of figure 2, two connecting elements are present, but obviously, the present description covers the presence of even just one connecting element (3). The abutment (2) is provided with threading (4) to be screwed to the implant (1). The Figure 3 represents another embodiment of the present invention in which the abutment (2) has a screw device (5) to be screwed into the implant (1) having a suitable thread. The possibility of having an abutment (2) that can be screwed on the implant (1) is advantageous because such abutment (2) is installed after the placement of the dental implant (1) in the bone crest. Such subsequent installation allows the operator to concentrate only on the dental implant (1) insertion into the bone crest, without having to worry about the abutment (2), that could be damaged during placement of the dental implant (1) into the bone crest.

## Claims

1. Abutment (2) of a dental implant (1), **characterized by the fact that** such abutment (2) of the said dental implant (1) is fitted with at least one connecting element (3) suitable to join at least two abutments (2).

2. Abutment (2) of a dental implant (1) according to claim 1, **characterized by the fact that** the connecting element (3) is shaped as a small blade with a rectangular surface.

3. Abutment (2) of a dental implant (1) according to claim 1, **characterized by the fact that** the connecting element (3) is made of titanium.

4. Abutment (2) of a dental implant (1) according to claim 1, **characterized by the fact that** the connecting element (3) is made of a titanium alloy of a grade lower than 4.

5. Abutment (2) of a dental implant (1) according to claim 1, **characterized by the fact that** the said abutment (2) is provided with threads (4) to be screwed to the dental implant (1).

6. Abutment (2) of a dental implant (1) according to claim 1, **characterized by the fact that** the said abutment (2) is provided with a screw device (5) to be screwed into the dental implant (1) having a suitable thread.
